# EUROPÄISCHE PATENTSCHRIFT

(11) **EP 0 415 011 B1**
(45) Veröffentlichungstag und Bekanntmachung des Hinweises auf die Patenterteilung: **24.02.1993**
(21) Anmeldenummer: 90110926.4
(22) Anmeldetag: 09.06.1990
(51) Int. Cl.: H01M 2/26, H01M 6/10

(54) **Verbindungselement zwischen Elektroden-Separatorwickel und Zellenpol einer galvanischen Zelle**
Connection element between electrode separator roll and terminal of a galvanic cell
Elément de connexion entre l'enroulement des électrodes et du séparateur et le pôle d'une cellule galvanique

(30) Priorität: 10.07.1989 DE 3922596
(43) Veröffentlichungstag der Anmeldung: 06.03.1991
(73) Patentinhaber: VARTA Batterie Aktiengesellschaft, D-30405 Hannover (DE)
(72) Erfinder: Seefeldt, Volker, Dipl.-Ing., Varta Batteries, Singapore 9146 (SG); Apprich, Thomas, Dipl.-Ing. (FH), D-7080 Aalen (DE)
(74) Vertreter: Kaiser, Dieter Ralf, Dipl.-Ing.

(56) Entgegenhaltungen:
- FR-A- 2 454 706

## Beschreibung

Die Erfindung betrifft ein galvanisches Element mit einer bandförmigen positiven Elektrode, einer bandförmigen negativen Elektrode und einem zwischenliegenden bandförmigen Separator, die zu einem Elektrodenwickel spiralig aufgerollt sind, mit einem zylindrischen Gehäuse zur Aufnahme des Elektrodenwickels, mit einem gegen das Gehäuse isolierten und abgedichteten Zellenpol sowie einem Verbindungselement, welches den räumlichen Abstand zwischen dem Zellenpol und dem Rand des einen Elektrodenbandes leitend überbrückt.

Bevorzugt anwendbar ist die Erfindung auf Lithium-Wickelzellen, aber auch auf Ni/Cd-Akkumulatoren in Rundzellenform mit gewickelten Sinterfolienelektroden.

Bei Wickelzellen dieser Art ist das Elektrodenband der einen Polarität stets etwas länger als das Elektrodenband der anderen Polarität, so daß ersteres das äußerste Ende der Spiralwicklung bildet und mit der Innenwand des Gehäusebechers in unmittelbaren Kontakt gebracht werden kann. In der Regel wird die äußerste Spiralwicklung von der negativen Elektroden gebildet, und der Gehäusebecher ist demzufolge zugleich der negative Zellenpol.

Das Elektrodenband der anderen Polarität muß hingegen auf umständlichere Weise mit dem entsprechenden Zellenpol verbunden werden, welcher entweder ein in den Zellendeckel eingelassener und gegen diesen isolierter Metallknopf, eine Flanschkappe oder ein metallischer Zellendeckel selbst ist. Die Kontaktierung macht in diesem Falle stets ein Verbindungselement zur Überbrückung des Abstandes zwischen dem nach draußen führenden Zellenpol und der betreffenden Elektrode erforderlich.

Gemäß DE-PS 30 14 435 hat eine Spiralfeder die Rolle eines solchen Verbindungselementes inne, indem sie einen mit einer Lithium-Wickelelektrode verbundenen Kollektorstab mit einem metallischen Gehäusedeckel als negativem Zellenpol in Kontakt bringt.

In anderen Fällen ist einer der Bandelektroden an ihrem von aktiver Masse freigehaltenen Rand eine Fahne angeschweißt. Diese muß im weiteren Verlauf der Zellenmontage positioniert werden, um sie durch eine Widerstandsschweißung mit dem nach draußen führenden Polstück zu verbinden. Aber selbst bei kürzester Distanz zwischen Zellenpol und Fahnenableiter ist eine flexible Zwischenverbindung aus schweißtechnischen oder montagetechnischen Gründen nicht zu umgehen. Die dichte alkalische Zelle gemäß US-PS 3 579 387 liefert dafür ein Beispiel.

Im übrigen stört die am Elektrodenband angebrachte Ableiterfahne bereits beim Wickeln der Elektrode und mindert die Kapazität der Wickelmaschine. Später stört die nach oben aus dem Zellenbecher herausragende Ableiterfahne beim Elektrolytdosieren mit Vakuum, da sich die Zelle schlecht abdichten läßt. Die Labilität der Ableiterfahne führt außerdem zu Störungen in einer automatisierten Fertigung.

Speziell im Zusammenhang mit der Fertigung von Lithium-Wickelzellen stellt sich das Problem, daß das Anschweißen von Ableiterfahnen, die aus den dargelegten Gründen auch besonders lang dimensioniert sein können, um eine Zick-zack-Faltung zu ermöglichen, in einer mit Argon gefüllten Box durchgeführt werden muß.

Der Erfindung liegt die Aufgabe zugrunde, ein galvanisches Element vom Typ der Wickelzelle anzugeben, bei dem die elektrische Verbindung zwischen dem nach außen führenden Kontakt und dem Elektrodenband der entsprechenden Polarität einfacher, zumindest montagefreundlicher als bisher, gestaltet ist und deren Herstellung in den Produktionsfluß leicht eingegliedert werden kann.

Die Aufgabe wird erfindungsgemäß durch ein galvanisches Element gelöst, wie es im Patentanspruch 1 definiert ist.

Der besondere Vorteil der Erfindung liegt darin, daß zur elektrischen Anbindung der einen Wickelelektrode - vorzugsweise ist es die positive Elektrode - an ihren Außenpol ein Verbindungselement verfügbar ist, welches außerhalb der Zelle aus Teilen vormontiert wird und dessen endgültige Plazierung ohne einen Schweißvorgang erfolgt. Auch das zu kontaktierende Elektrodenband braucht weder einen Kollektorstab noch einen Fahnenableiter zu besitzen, so daß weder dem Wickelvorgang noch der Elektrolytdosierung irgendeines der bereits erwähnten Hindernisse im Wege steht.

Aufbau und Funktionsweise des Verbindungselements gemäß der Erfindung lassen sich am besten über dessen Herstellungsschritte anhand figürlicher Darstellungen beschreiben.
Figur 1 zeigt die Stadien der Vormontage des neuen Verbindungselements.
Figur 2 zeigt eine mit dem neuen Verbindungselement ausgestattete Wickelzelle.

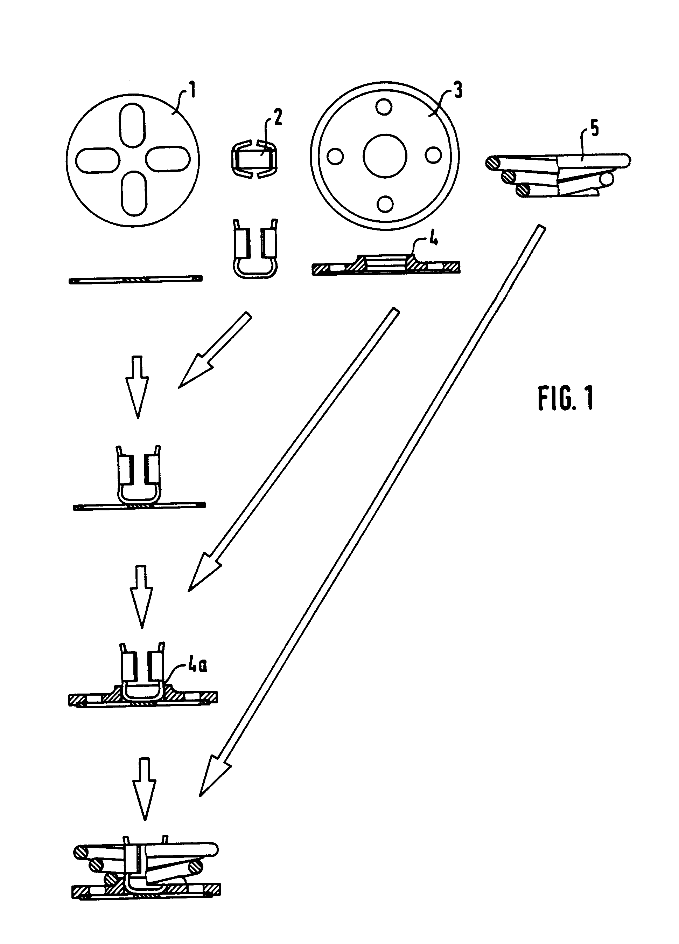

Nach Figur 1 wird auf eine Kontaktscheibe 1 aus V2A-Stahl zunächst eine gabelförmige Kontaktklammer 2 zentrisch aufgeschweißt.

Auf die Kontaktscheibe wird alsdann eine spritzgegossene, zentral gelochte Isolierscheibe aus Polypropylen aufgedrückt. Eine feste Halterung ergibt sich durch die druckknopfartige Ausgestaltung der ineinandergreifenden Teile der Isolierscheibe und der Kontaktklammer.

In entsprechender Weise wird dann eine spiralige Konusfeder 5 auf den Kragen 4, der die Lochung der Isolierscheibe umgibt, aufgedrückt, wobei der Kragen 4 so gestaltet ist, daß die Konusfeder durch eine elastische Hinterschneidung 4a fest gehaltert ist. Der Kragen 4 dient gleichzeitig der Isolierung zwischen der gabelförmigen Kontaktklammer 2 und der Konusfeder 5.

Die separat von der Zelle erfolgende Vormontage des Verbindungselements ist damit beendet.

Das Verbindungselement wird nunmehr in den Zellenbecher, der bereits mit dem Elektrodenwickel, bestehend aus Anodenband, Kathodenband und Separator, bestückt ist, eingeschoben. Der Elektrodenwickel ist dabei so eingerichtet, daß zumindest an seiner oberen, dem Deckel zugekehrten Stirnseite der Rand des einen Elektrodenbandes, welches mit dem nach außen führenden Pol kontaktiert werden soll und in der Regel die Innenseite der Spiralwicklung bildet, über den Rand des anderen Elektrodenbandes hinaussteht.

Auf den überstehenden Rand, der beispielsweise der Rand des Kathodenbandes ist, wird das komplette Verbindungselement, die Kontaktscheibe zuunterst, mit einem von oben in den offenen Becher einfahrenden Sickendorn - einem zylindrischen Stempel, dessen Durchmesser etwas geringer als der Innendurchmesser des Bechers ist - unter gleichzeitigem Zusammenpressen der spiraligen Konusfeder aufgepreßt. Der Sickendorn bildet das Widerlager für ein an der Außenseite des Bechers umlaufendes Sickenrad, welches in die Becherwand in einer Höhe unmittelbar über der zusammengedrückten Feder eine umlaufende Sicke einprägt. Die Feder, die sich im Innern der Zelle gegen die Sicke abstützt, bleibt durch diese Maßnahme, auf deren bildliche Wiedergabe hier verzichtet wurde, dauernd gespannt.

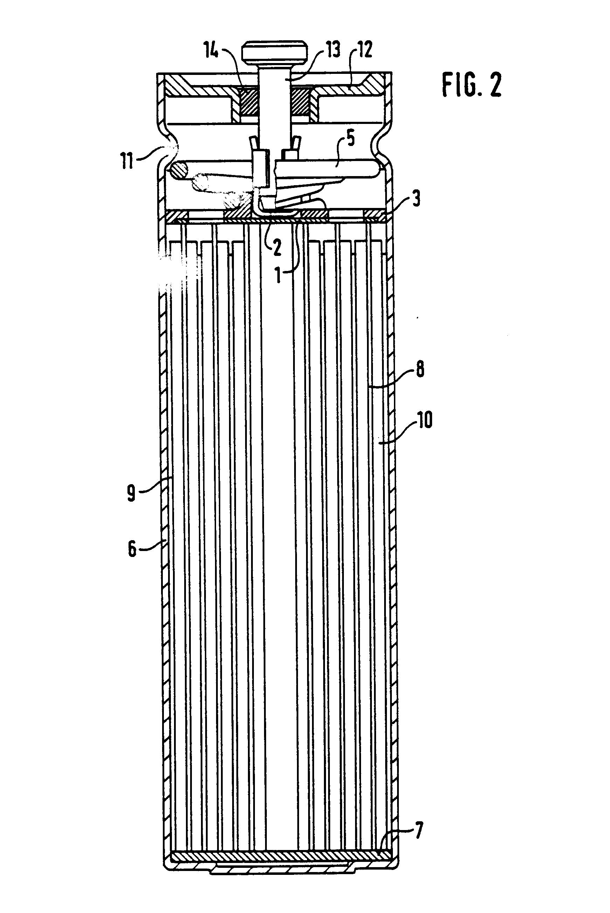

Anhand von Figur 2, welche die fertige Zelle zeigt, lassen sich die letzten Schritte der Fertigmontage leicht nachvollziehen.

Im Zellenbecher 6, dessen Boden mit einer Isoliermatte 7 ausgelegt ist, befindet sich bereits der Elektrodenwickel aus positiver Elektrode 8, negativer Elektrode 9 und zwischenliegendem Separator 10.

Das Verbindungselement gemäß der Erfindung, vormontiert aus der Kontaktscheibe 1 mit aufgeschweißter Kontaktklammer 2, der Isolierscheibe 3 mit Kragen 4 und der spiraligen Konusfeder 5, ist ebenfalls eingeführt und über der Sicke 11 gespannt.

Bei der nunmehr folgenden Elektrolytbefüllung wird ein Vakuumdosierkopf verwendet, der die Zelle mit seinem Dichtelement auf der Sicke abdichtet.

Handelt es sich bei dem vorliegenden galvanischen Element um eine Lithiumzelle, müssen dieser und alle weiteren Schritte in einer mit Argon oder einem anderen Inertgas gefüllten Box vorgenommen werden.

Die nächsten und zugleich letzten Schritte sind das Aufsetzen des Zellendeckels und das Verschließen der Zelle, vorzugsweise durch Verschweißen mit Laser.

Wie aus Figur 2 ersichtlich, handelt es sich bei dem Deckel ebenfalls um ein unter normalen Umweltbedingungen vormontierbares Element, bestehend aus der mit einer zentralen Öffnung versehenen metallischen Flanschkappe 12, dem durch die Öffnung hindurchgeführten Endpol oder Kontakt 13 und der Dichtung 14. Beim Aufsetzen des Deckels wird der Kontakt 13 ähnlich einem Stecker in die gabelförmige Kontaktklammer 2 eingeschoben und damit die elektrische Verbindung zur (positiven) Elektrode 8 über das erfindungsgemäße Verbindungselement hergestellt.

Da alle zu montierenden Teile rotationssymmetrisch sind, entfällt eine Positionierung von Ableiterelementen, was einer automatisierten Fertigung mit hohen Taktgeschwindigkeiten entgegenkommt.

Während der eigentlichen Zellenmontage wird keine Schweißoperation benötigt. Durch den Elektrolytdosiervorgang wird die später mit Laser zu verschweißende Zone nicht mit Elektrolyt benetzt.

Soweit Fertigungsschritte in einer Inertgasatmosphäre durchgeführt werden müssen, bleiben diese auf Zellen mit luftempfindlichen aktiven Komponenten wie Lithium-Wickelzellen beschränkt.

## Patentansprüche

1. Galvanisches Element mit einer bandförmigen positiven Elektrode, einer bandförmigen negativen Elektrode und einem zwischenliegenden bandförmigen Separator, die zu einem Elektrodenwickel spiralig aufgerollt sind, mit einem zylindrischen Gehäuse zur Aufnahme des Elektrodenwickels, mit einem gegen das Gehäuse isolierten und abgedichteten Zellenpol sowie einem Verbindungselement, welches den räumlichen Abstand zwischen dem Zellenpol und dem Rand des einen Elektrodenbandes leitend überbrückt, dadurch gekennzeichnet, daß das Verbindungselement eine Kombination zwischen einer Kontaktscheibe (1) mit zentrisch aufgeschweißter gabelförmiger Kontaktklammer (2) und einer der Kontaktscheibe unter Zwischenlage einer zentral gelochten Isolierscheibe (3) aufgesetzten Druckfeder (5) ist, wobei die Kontaktscheibe mit der Kraft der gespannten Druckfeder auf den an der Stirnseite des Wickels hinausstehenden Rand des einen Elektrodenbandes (8) aufdrückt, und daß der Endpol (14) in die gabelförmige Kontaktklammer eingesteckt ist.

2. Galvanisches Element nach Anspruch 1, dadurch gekennzeichnet, daß die gespannte Druckfeder gegen eine am Zellengehäuse (6) umlaufende Sicke (12) abgestützt ist.

3. Galvanisches Element nach Anspruch 2, dadurch gekennzeichnet, daß das mit dem Polableiter kontaktierte eine Elektrodenband die positive Elektrode ist.

4. Galvanisches Element nach einem der Ansprüche 1 bis 3, dadurch gekennzeichnet, daß es eine Lithium-Wickelzelle ist.

## Claims

1. Galvanic cell, having a strip-shaped positive electrode, a strip-shaped negative electrode and disposed therebetween a strip-shaped separator which are rolled up in the manner of a spiral to form an electrode winding, having a cylindrical housing for receiving the electrode winding, having a cell pole which is insulated and sealed off with respect to the housing, and having a connection element which bridges the space between the cell pole and the edge of the one electrode strip in conductive manner, characterized in that the connection element is a combination of a contact plate (1) having a centrally welded-on fork-shaped contact clip (2) and a pressure spring (5) placed on the contact plate with the interposition of a centrally apertured insulating plate (3), the contact plate being pressed by the force of the tensioned pressure spring onto the edge of the one electrode strip (8) projecting at the end side of the winding, and in that the terminal pole (14) is inserted into the fork-shaped contact clip.

2. Galvanic cell according to Claim 1, characterized in that the tensioned pressure spring is supported against a bead (12) running around the cell housing (6).

3. Galvanic cell according to Claim 2, characterized in that the one electrode strip which is contacted by the pole current collector is the positive electrode.

4. Galvanic cell according to one of Claims 1 to 3, characterized in that it is a lithium winding cell.

## Revendications

1. Elément galvanique avec une électrode positive en forme de bande, une électrode négative en forme de bande, et un séparateur intermédiaire en forme de bande, qui sont enroulés en spirale pour constituer un enroulement d'électrodes, avec un boîtier cylindrique destiné à recevoir l'enroulement d'électrode, avec un pôle de cellules isolé et étanché par rapport au boîtier, ainsi qu'avec un élément de connexion qui ponte la distance entre le pôle de la cellule et le bord de l'une des bandes d'électrodes, élément galvanique caractérisé en ce que l'élément de connexion est une combinaison entre un disque de contact (1) avec, soudée sur lui en son centre, une pince de contact (2) en forme de fourche et un ressort de pression (5) posé sur le disque de contact avec interposition d'un disque isolant (3) perforé au centre, tandis que le disque de contact est pressé par l'action du ressort de pression comprimé sur le bord de l'une des bandes d'électrodes (8) faisant saillie sur la face frontale de l'enroulement, et en ce que le pôle terminal (14) est enfiché dans la pince de contact en forme de fourche.

2. Elément galvanique selon la revendication 1, caractérisé en ce que le ressort de pression comprimé prend appui contre une moulure (12) périphérique sur le boîtier (6) de la cellule.

3. Elément galvanique selon la revendication 2, caractérisé en ce que celle des bandes d'électrodes mises en contact avec le conducteur polaire est l'électrode positive.

4. Elément galvanique selon une des revendications 1 à 3, caractérisé en ce qu'il s'agit d'une cellule enroulée au lithium.
